# EUROPEAN PATENT SPECIFICATION

(11) **EP 4 295 021 B1**
(45) Date of publication and mention of the grant of the patent: **23.07.2025**
(21) Application number: 21708716.2
(22) Date of filing: 19.02.2021
(51) Int. Cl.: F02B 19/16, F02B 19/18

(54) **PRECHAMBER ARRANGEMENT, CYLINDER HEAD AND PISTON ENGINE**
VORKAMMERANORDNUNG, ZYLINDERKOPF UND KOLBENMOTOR
DISPOSITIF DE PRECHAMBRE, CULASSE ET MOTEUR A PISTONS

(43) Date of publication of application: 27.12.2023
(73) Proprietor: Wärtsilä Finland Oy, 65170 Vaasa (FI)
(72) Inventor: OJANPERÄ, Ari-Matti, 65100 Vaasa (FI); SEPPÄ, Jussi, 65100 Vaasa (FI); AHLVIK, Ilari, 65100 Vaasa (FI); CAFARI, Alberto, 34018 Trieste (IT)
(74) Representative: Berggren Oy
(86) International application number: PCT/FI2021/050128
(87) International publication number: WO 2022/175586

(56) References cited:
- EP-A1- 2 899 381
- EP-A1- 3 536 923
- JP-A- 2014 062 484
- US-A1- 2014 261 298
- US-A1- 2018 266 307

## Description

### Technical field of the invention

The present invention relates to a prechamber arrangement for a cylinder of a four-stroke piston engine in accordance with the preamble of claim 1. The invention also concerns a cylinder head and a piston engine.

### Background of the invention

Internal combustion engines can be provided with prechambers, also called as precombustion chambers. In prechamber engines, each cylinder is provided with a prechamber, and part or all of the fuel is introduced into the prechamber. Depending on the engine, the fuel can be self-ignited, or a spark plug or some other device can be used for igniting the fuel. The combustion thus starts in the prechamber, but main part of the combustion takes place in the cylinder outside the prechamber. The prechamber construction is beneficial especially in lean burn engines, where part of the fuel is introduced into the prechamber and part of the fuel is mixed with the air before the intake valves. This kind of arrangement can be used, for instance, in spark ignited gas engines. The gas-air mixture in the prechamber is rich compared to the mixture in the cylinder. The rich mixture in the prechamber is ignited by a spark plug and the flames from the prechamber ignite the mixture in the cylinder.

A common trend in the development of piston engines is that the ratio between the output power and the cylinder volume is continuously growing. This helps increasing the thermal efficiency of the engines. However, a consequence of this development is that modern four-stroke engines need to withstand very high thermal loads. In some cases, the thermal load of the components of combustion chambers may be a limiting factor that prevents increasing of the output power of an engine. Alternatively, substantial modifications in the engine design may be required, for instance in the form of more effective cooling systems, or the materials of some components need to be replaced by materials with good thermal resistance. This naturally increases the manufacturing costs.

EP 2 899 381 A1 and EP 3 536 923 A1 present known solutions.

### Summary of the invention

An object of the present invention is to provide an improved prechamber arrangement for a cylinder of a four-stroke piston engine, where the cylinder comprises a main combustion chamber that is delimited by the walls of the cylinder, a cylinder head and a piston, at least one intake valve and at least exhaust valve, wherein all the intake valves of the cylinder are arranged on an intake valve side of an imaginary plane that is parallel two the axial direction of the cylinder and divides the cylinder into two sections, and all the exhaust valves of the cylinder are arranged on an exhaust valve side of said imaginary plane. The arrangement comprises a prechamber that is provided with at least one intake valve side nozzle opening that is configured to discharge fluids from the prechamber into the main combustion chamber on the intake valve side of the cylinder, and at least one exhaust valve side nozzle opening that is configured to discharge fluids from the prechamber into the main combustion chamber on the exhaust valve side of the cylinder. The characterizing features of the prechamber arrangement according to the invention are given in the characterizing part of claim 1.

According to the invention, the nozzle openings of the prechamber are configured to guide the flow from the prechamber into the main combustion chamber on the exhaust valve side of the cylinder more towards the piston than on the intake valve side of the cylinder. This reduces the thermal load of the cylinder liner and cylinder head on the exhaust valve side, where the thermal loads are typically higher than on the intake valve side.

According to an embodiment of the invention, the arithmetic mean of the angles between the axial direction of each exhaust valve side nozzle opening of the prechamber and the axial direction of the cylinder is smaller than the arithmetic mean of the angles between the axial direction of each intake valve side nozzle opening of the prechamber and the axial direction of the cylinder. The difference between the arithmetic means can be, for instance, in the range of 2-45 degrees. The nozzle openings of the prechamber can thus be inclined on average more towards the piston on the exhaust valve side, which reduces the flow towards the cylinder liner.

According to an embodiment of the invention, the angle between the axial direction of any of the exhaust valve side nozzle openings of the prechamber and the axial direction of the cylinder is smaller than the angle between the axial direction of any of the intake valve side nozzle openings of the prechamber and the axial direction of the cylinder. All the exhaust valve side nozzle openings can thus be inclined more towards the piston than the intake valve side nozzle openings.

According to an embodiment of the invention, the outer edge of at least one exhaust valve side nozzle opening comprises a rounded or chamfered portion that is arranged on the side of the piston. The edge of the nozzle opening on the side of the main combustion chamber thus comprises a rounded or chamfered portion on the lower side of the opening. The flow and the flame jet from the prechamber into the main combustion chamber follows the edge and the flow is thus guided more towards the piston than with a corresponding nozzle opening with a sharp edge.

According to an embodiment of the invention, the rounded or chamfered portion extends over an angle of 90-200 degrees. The rounded or chamfered portion can extend approximately over the lower half of the nozzle opening. However, even a smaller rounded or chamfered portion may provide a sufficient effect, and the portion could extend a little bit to the upper half of the nozzle opening.

According to an embodiment of the invention, the rounded or chamfered portion extends over an angle of 120-180 degrees.

According to an embodiment of the invention, each of the exhaust valve side nozzle openings comprises a rounded or chamfered portion.

According to an embodiment of the invention, the nozzle openings of the prechamber are configured so that a greater part of the flow from the prechamber into the main combustion chamber is directed to the intake valve side than to the exhaust valve side. This further reduces the thermal load on the exhaust valve side.

According to the invention, the total cross-sectional area of the intake valve side nozzle openings is greater than the total cross-sectional area of the exhaust valve side nozzle openings. A greater cross-sectional area can be achieved by providing more nozzle openings on the intake valve side and/or by providing the intake valve side with larger nozzle openings. Thus, the number of the intake valve side nozzle openings can be greater than the number of the exhaust valve side nozzle openings and/or the average cross-sectional area of the intake valve side nozzle openings can be greater than the average cross-sectional area of the exhaust valve side nozzle openings.

A cylinder head according to the invention is provided with a prechamber arrangement defined above.

A piston engine according to the invention comprises a prechamber arrangement defined above.

### Brief description of the drawings

Embodiments of the invention are described below in more detail with reference to the accompanying drawings, in which
Fig. 1 shows schematically part of a cylinder and a cylinder head of a piston engine,
Fig. 2 shows a schematic view of a bottom of a cylinder head within a cylinder,
Fig. 3 shows a cross-sectional view of a nozzle opening of a prechamber,
Fig. 4 shows a simplified cross-sectional view of a nozzle part of a prechamber, and
Fig. 5 shows another simplified cross-sectional view of a nozzle part of a prechamber.

### Description of embodiments of the invention

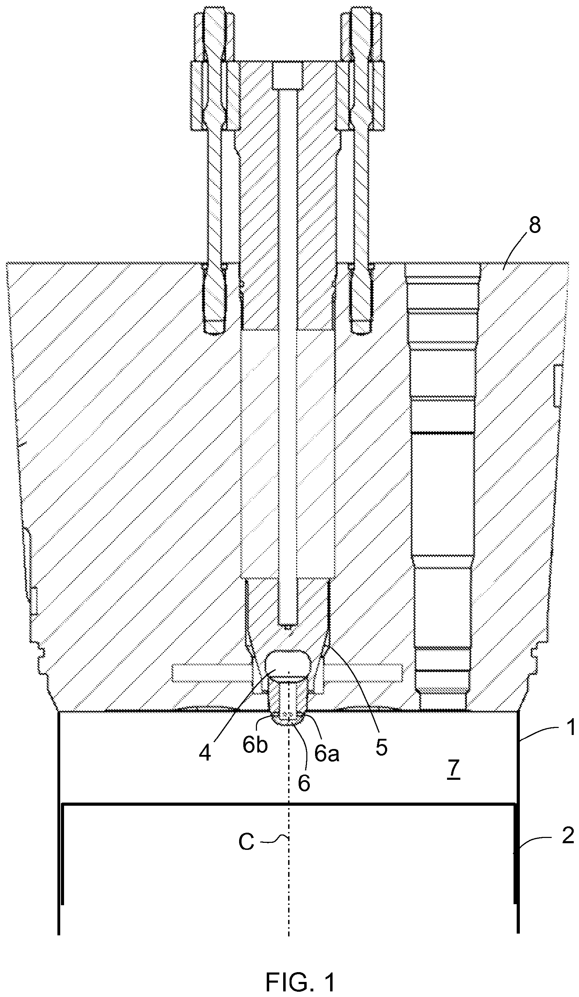

In figure 1 is shown a cylinder head 8 of a piston engine. The engine is a large internal combustion engine, such as a main or an auxiliary engine of a ship or an engine that is used at a power plant for producing electricity. The engine is provided with a number of cylinders 1. Each cylinder 1 of the engine is provided with a cylinder head 8, which closes the upper end of the cylinder 1. The term "upper" refers here to that end of the cylinder 1, which is farther from the crankshaft. The cylinders 1 do not need to be arranged vertically, but they can be in some other angle in relation to the base of the engine. The cylinder 1 has an axial direction C. A main combustion chamber 7 is formed within the cylinder 1 between the cylinder head 8 and a piston 2 that is arranged to move in a reciprocating manner in the cylinder 1. The wall of the cylinder 1 is formed by a cylinder liner. The main combustion chamber 7 is in fluid communication with a prechamber 4. Intake air or a mixture of intake air and fuel, residual gases of combustion and possible recirculated exhaust gas can thus flow from the main combustion chamber 7 into the prechamber 4. Flow of fluids from the prechamber 4 into the main combustion chamber 7 is also possible. In the embodiment of figure 1, the prechamber 4 is concentric with the main combustion chamber 4.

In the embodiment of figure 1, the engine is a spark ignition gas engine, where part of the gaseous fuel is introduced into an intake duct to form a lean air/fuel mixture, and part of the fuel is introduced into the prechamber 4 to form a rich mixture, which is ignited by a spark plug. The leaner mixture in the main combustion chamber 7 is ignited by the combustion of the richer mixture formed in the prechamber 4.

The prechamber 4 is formed by a body part 5 and a nozzle part 6. The body part 5 and the nozzle part 6 can be either separate parts or integrated into a single part. Each of the body part 5 and the nozzle part 6 could also be formed of several separate parts.

The nozzle part 6 comprises a plurality of nozzle openings 6a, 6b. Via the nozzle openings 6a, 6b, fluids are discharged from the prechamber 4 into the main combustion chamber 7.

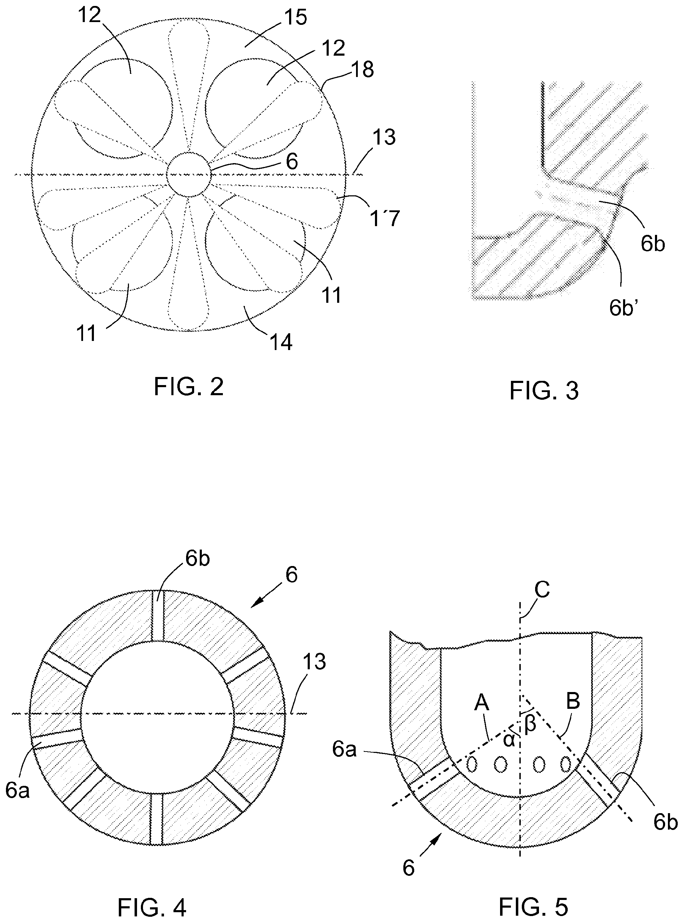

Each cylinder 1 of the engine is provided with two intake valves 11 and two exhaust valves 12, which are schematically shown in figure 2. An imaginary plane 13, which is parallel to the axial direction C of the cylinder 1, divides the cylinder 1 into two sections 14, 15. One of the sections is an intake valve side 14 and one of the sections is an exhaust valve side 15 of the cylinder 1. The intake valves 11 are located on the intake valve side 14 of the imaginary plane 13 and the exhaust valves 12 are located on the exhaust valve side 15 of the imaginary plane 13. In the embodiment of figure 2, the imaginary plane 13 divides the cylinder into two halves of equal size. However, the imaginary plane 13 does not need to be a center plane of the cylinder. For instance, the diameter of the intake valves 11 may be bigger than the diameter of the exhaust valves 12. The intake valve side 14 may thus be bigger than the exhaust valve side 15. The imaginary plane 13 can thus be offset from the center plane of the cylinder.

At least one of the nozzle openings 6a, 6b of the prechamber 4 is an intake valve side nozzle opening 6a configured to discharge fluids from the prechamber 4 into the main combustion chamber 7 on the intake valve side 14 of the cylinder. At least one of the nozzle openings 6a, 6b of the prechamber 4 is an exhaust valve side nozzle opening 6b configured to discharge fluids from the prechamber 4 into the main combustion chamber 7 on the exhaust valve side 15 of the cylinder. In the embodiment of figure 2, the nozzle part 6 of the prechamber 4 is concentric with the longitudinal center axis of the cylinder 2. However, the invention could also be implemented in connection with a prechamber, where the nozzle part 6 is not concentric with the longitudinal center axis of the cylinder 2. The nozzle part 6 and/or the prechamber 4 could thus be offset from the longitudinal center axis of the cylinder 2. The nozzle part 6 could also be inclined in respect of the longitudinal center axis of the cylinder 2.

Figure 2 shows schematically five fluid jets 17 that are directed from the nozzle part 6 of the prechamber 4 towards the intake valve side 14 of the cylinder, and three fluid jets 18 that are directed towards the exhaust valve side 15 of the cylinder. Figure 4 shows a corresponding nozzle part 6 of a prechamber comprising five intake valve side nozzle openings 6a and three exhaust valve side nozzle openings 6b.

According to the invention, the nozzle openings 6a, 6b of the prechamber 4 are configured to guide the flow from the prechamber 4 into the main combustion chamber 7 on the exhaust valve side 15 of the cylinder 1 more towards the piston 2 than on the intake valve side 14 of the cylinder 1. In other words, on the intake valve side 14 the flow is guided more towards the wall of the cylinder 1 than on the exhaust valve side 15.

Hot exhaust gas is discharged through the exhaust valves 12, whereas cooler intake air is introduced into the cylinder 1 through the intake valves 11. The exhaust valve side 15 of the cylinder 1 thus typically experiences higher temperatures than the intake valve side 14. Therefore, on the exhaust valve side 15 of the cylinder, the thermal loads are typically higher than on the intake valve side 14. Especially the thermal load experienced by the cylinder liner may be a factor that limits the maximum power output of the engine. By guiding the flow from the prechamber 4 more towards the piston 2 on the exhaust valve side 15 of the cylinder 1, a more evenly distributed thermal load on the cylinder liner and the cylinder head can be achieved.

The flow from the prechamber 4 can be guided towards the piston 2 in different ways. One way of guiding the flow more towards the piston 2 on the exhaust valve side 15 of the cylinder 1 is to incline one or more of the exhaust valve side nozzle openings 6b more towards the piston 2 than the intake valve side nozzle openings 6a. Figure 5 shows a cross-sectional view of one intake valve side nozzle opening 6a and one exhaust valve side nozzle opening 6b. The axial direction A of the intake valve side nozzle opening 6a is at angle α relative to the axial direction C of the cylinder. The axial direction B of the exhaust valve side nozzle opening 6b is at angle β relative to the axial direction C of the cylinder. An angle of 90 degrees would mean that the injection direction of the nozzle opening 6a, 6b is towards the cylinder liner, whereas an angle of 0 degrees would mean that the injection direction is towards the piston.

Angles α and β can be determined for each intake valve side nozzle opening 6a and exhaust valve side nozzle opening 6b, respectively. According to an embodiment of the invention, the arithmetic mean of angles β is smaller than the arithmetic mean of angles α. The angle between the axial direction of the nozzle opening 6a, 6b and the axial direction C of the cylinder is thus on average smaller on the exhaust valve side 15 than on the intake valve side 14.

The average angle β can be, for instance, 2-45 degrees smaller than the average angle α.

All the intake valve side nozzle openings 6a can be arranged at the same angle α. Likewise, all the exhaust valve side nozzle openings 6b can be arranged at the same angle β. However, it is also possible that not all the intake valve side nozzle openings 6a are arranged at the same angle with each other and/or not all the exhaust valve side nozzle openings 6b are arranged at the same angle with each other.

The suitable difference in the angles α and β depends, for instance, on the shape of the piston top. Also, the positions of the nozzle openings 6a, 6b can be taken into account in the configuration of individual nozzle openings 6a, 6b. For instance, those exhaust valve side nozzle openings 6b that are located farthest from the imaginary plane 13 can be inclined more towards the piston 2 than those exhaust valve side nozzle openings 6b that are located close to the imaginary plane 13.

The nozzle openings 6a, 6b can be configured so that angle β between the axial direction B of any of the exhaust valve side nozzle openings 6b of the prechamber 4 and the axial direction C of the cylinder 1 is smaller than angle α between the axial direction A of any of the intake valve side nozzle openings 6a of the prechamber 4 and the axial direction C of the cylinder 1.

An alternative way of guiding the flow from the prechamber 4 more towards the piston 2 on the exhaust valve side 15 is to provide the outer edge of at least one of the exhaust valve side nozzle openings 6b with a rounded portion 6b' that is arranged on the side of the piston 2, as shown in figure 3. The rounded portion 6b' is thus on the lower side of the nozzle opening 6b. The outer edge is the edge on the side of the main combustion chamber 7. The rounded edge guides the flow from the prechamber more towards the piston 2. The flame and fluid flow from the prechamber 4 follows the rounded edge, which deflects the flow from the axial direction B of the exhaust valve side nozzle opening 6b. The use of the rounded portion 6b' in the exhaust valve side nozzle openings 6b can also be combined with the different inclination angles α, β of the intake and exhaust valve side nozzle openings 6a, 6b.

The rounded portion 6b' can cover approximately half of the nozzle opening 6b. The rounded portion 6b' could thus extend over an angle of 120-180 degrees. However, even a smaller rounded portion 6b' could sufficiently guide the flow towards the piston 2 and the effect would not be significantly disturbed even if the rounded portion 6b' would extend a little bit over 180 degrees. The rounded portion 6b' could thus extend for example over an angle of 90-200 degrees.

All the exhaust valve side nozzle openings 6b can comprise a rounded portion 6b'.

A similar effect as with the rounded portion could be achieved with a chamfered edge of the nozzle opening 6b.

A further reduction of the thermal load can be achieved by configuring the nozzle openings 6a, 6b so that a greater part of the flow from the prechamber 4 into the main combustion chamber 7 is directed to the intake valve side 14 than to the exhaust valve 15 side. This can be achieved by configuring the total cross-sectional area of the intake valve side nozzle openings 6a to be greater than the total cross-sectional area of the exhaust valve side nozzle openings 6b.

The greater total cross-sectional area on the intake valve side can be achieved by having more nozzle openings 6a, 6b on the intake valve side 14 than on the exhaust valve side 15, as shown in figures 2 and 4, in which figure 2 shows schematically fluid jets 17, 18 to the intake valve side 14 and exhaust valve side 15 and figure 4 shows nozzle openings 6a, 6b on the intake valve side 14 and exhaust valve side 15 of plane 13.

Instead of providing the intake valve side 14 with more nozzle openings than the exhaust valve side 15, the average cross-sectional area of the intake valve side nozzle openings 6a can be greater than the average cross-sectional area of the exhaust valve side nozzle openings 6b. The intake valve side 14 can thus be provided with larger nozzle openings 6a than the exhaust valve side 15. It is also possible to combine the use of larger nozzle openings 6a on the intake valve side 14 and the greater number of nozzle openings 6a on the intake valve side 14. The intake valve side 14 can thus be provided both with more nozzle openings 6a and larger nozzle openings 6a than the exhaust valve side 15.

## Claims

1. A prechamber arrangement for a cylinder (1) of a four-stroke piston engine, the cylinder (1) comprising
- a main combustion chamber (7) that is delimited by the walls of the cylinder (1), a cylinder head (8) and a piston (2),
- at least one intake valve (11), and
- at least one exhaust valve (12),
wherein all the intake valves (11) of the cylinder (1) are arranged on an intake valve side (14) of an imaginary plane (13) that is parallel two the axial direction of the cylinder (1) and divides the cylinder (1) into two sections, and all the exhaust valves (12) of the cylinder (1) are arranged on an exhaust valve side (15) of said imaginary plane (13),
wherein the arrangement comprises a prechamber (4) that is provided with at least one intake valve side nozzle opening (6a) that is configured to discharge fluids from the prechamber (4) into the main combustion chamber (7) on the intake valve side (14) of the cylinder (1), and at least one exhaust valve side nozzle opening (6b) that is configured to discharge fluids from the prechamber (4) into the main combustion chamber (7) on the exhaust valve side (15) of the cylinder (1), and
wherein the total cross-sectional area of the intake valve side nozzle openings (6a) is greater than the total cross-sectional area of the exhaust valve side nozzle openings (6b),
**characterized in that** the nozzle openings (6a, 6b) of the prechamber (4) are configured to guide the flow from the prechamber (4) into the main combustion chamber (7) on the exhaust valve side (15) of the cylinder (1) more towards the piston (2) than on the intake valve side (14) of the cylinder (1).

2. A prechamber arrangement according to claim 1, wherein the arithmetic mean of the angles (β) between the axial direction (B) of each exhaust valve side nozzle opening (6b) of the prechamber (4) and the axial direction (C) of the cylinder (1) is smaller than the arithmetic mean of the angles (α) between the axial direction (A) of each intake valve side nozzle opening (6a) of the prechamber (4) and the axial direction (C) of the cylinder (1).

3. A prechamber arrangement according to claim 2, wherein the difference between the arithmetic means is 2-45 degrees.

4. A prechamber arrangement according to any of claim 1-3, wherein the angle (β) between the axial direction (B) of any of the exhaust valve side nozzle openings (6b) of the prechamber (4) and the axial direction (C) of the cylinder (1) is smaller than the angle (α) between the axial direction (A) of any of the intake valve side nozzle openings (6a) of the prechamber (4) and the axial direction (C) of the cylinder (1).

5. A prechamber arrangement according to any of the preceding claims, wherein the outer edge of at least one exhaust valve side nozzle opening (6b) comprises a rounded or chamfered portion (6b') that is arranged on the side of the piston (2).

6. A prechamber arrangement according to claim 5, wherein the rounded or chamfered portion (6b') extends over an angle of 90-200 degrees.

7. A prechamber arrangement according to claim 6, wherein the rounded or chamfered portion (6b') extends over an angle of 120-180 degrees.

8. A prechamber arrangement according to any of claims 5-7, wherein each of the exhaust valve side nozzle openings (6b) comprises a rounded or chamfered portion (6b').

9. A prechamber arrangement according to any of the preceding claims, wherein the nozzle openings (6a, 6b) of the prechamber (4) are configured so that a greater part of the flow from the prechamber (4) into the main combustion chamber (7) is directed to the intake valve side (14) than to the exhaust valve (15) side.

10. A prechamber arrangement according to any of the preceding claims, wherein the number of the intake valve side nozzle openings (6a) is greater than the number of the exhaust valve side nozzle openings (6b).

11. A prechamber arrangement according to any of the preceding claims, wherein the average cross-sectional area of the intake valve side nozzle openings (6a) is greater than the average cross-sectional area of the exhaust valve side nozzle openings (6b).

12. A cylinder head (8) for a piston engine, wherein the cylinder head (8) is provided with a prechamber arrangement according to any of the preceding claims.

13. A piston engine comprising a prechamber arrangement according to any of claims 1-11.

## Patentansprüche

1. Vorkammeranordnung für einen Zylinder (1) eines Viertakt-Kolbenmotors, wobei der Zylinder (1) Folgendes umfasst:
- eine Hauptbrennkammer (7), die durch die Wände des Zylinders (1), einen Zylinderkopf (8) und einen Kolben (2) begrenzt wird,
- mindestens ein Einlassventil (11) und
- mindestens ein Auslassventil (12),
wobei alle Einlassventile (11) des Zylinders (1) auf einer Einlassventilseite (14) einer imaginären Ebene (13) angeordnet sind, die parallel zur Axialrichtung des Zylinders (1) verläuft und den Zylinder (1) in zwei Abschnitte unterteilt, und alle Auslassventile (12) des Zylinders (1) auf einer Auslassventilseite (15) dieser imaginären Ebene (13) angeordnet sind,
wobei die Anordnung eine Vorkammer (4) umfasst, die mit mindestens einer einlassventilseitigen Düsenöffnung (6a) versehen ist, die dazu konfiguriert ist, Fluide aus der Vorkammer (4) in die Hauptbrennkammer (7) auf der Einlassventilseite (14) des Zylinders (1) abzugeben, und mindestens einer auslassventilseitigen Düsenöffnung (6b), die dazu konfiguriert ist, Fluide aus der Vorkammer (4) in die Hauptbrennkammer (7) auf der Auslassventilseite (15) des Zylinders (1) abzugeben, und
wobei die Gesamtquerschnittsfläche der einlassventilseitigen Düsenöffnungen (6a) größer ist als die Gesamtquerschnittsfläche der auslassventilseitigen Düsenöffnungen (6b),
**dadurch gekennzeichnet, dass** die Düsenöffnungen (6a, 6b) der Vorkammer (4) so ausgebildet sind, dass sie die Strömung von der Vorkammer (4) in die Hauptbrennkammer (7) auf der Auslassventilseite (15) des Zylinders (1) stärker in Richtung des Kolbens (2) leiten als auf der Einlassventilseite (14) des Zylinders (1).

2. Vorkammeranordnung nach Anspruch 1, wobei der arithmetische Mittelwert der Winkel (β) zwischen der Axialrichtung (B) jeder auslassventilseitigen Düsenöffnung (6b) der Vorkammer (4) und der Axialrichtung (C) des Zylinders (1) kleiner ist als der arithmetische Mittelwert der Winkel (α) zwischen der Axialrichtung (A) jeder einlassventilseitigen Düsenöffnung (6a) der Vorkammer (4) und der Axialrichtung (C) des Zylinders (1).

3. Vorkammeranordnung nach Anspruch 2, wobei die Differenz zwischen den arithmetischen Mittelwerten 2-45 Grad beträgt.

4. Vorkammeranordnung nach einem der Ansprüche 1 bis 3, wobei der Winkel (β) zwischen der axialen Richtung (B) einer beliebigen Düsenöffnung (6b) auf der Auslassventilseite der Vorkammer (4) und der axialen Richtung (C) des Zylinders (1) kleiner ist als der Winkel (α) zwischen der axialen Richtung (A) einer beliebigen Düsenöffnung (6a) auf der Einlassventilseite der Vorkammer (4) und der axialen Richtung (C) des Zylinders (1).

5. Vorkammeranordnung nach einem der vorhergehenden Ansprüche, wobei die Außenkante mindestens einer auslassventilseitigen Düsenöffnung (6b) einen abgerundeten oder abgeschrägten Abschnitt (6b') umfasst, der auf der Seite des Kolbens (2) angeordnet ist.

6. Vorkammeranordnung nach Anspruch 5, wobei sich der abgerundete oder abgeschrägte Abschnitt (6b') über einen Winkel von 90-200 Grad erstreckt.

7. Vorkammeranordnung nach Anspruch 6, wobei sich der abgerundete oder abgeschrägte Abschnitt (6b') über einen Winkel von 120-180 Grad erstreckt.

8. Vorkammeranordnung nach einem der Ansprüche 5 bis 7, wobei jede der auslassventilseitigen Düsenöffnungen (6b) einen abgerundeten oder abgeschrägten Abschnitt (6b') aufweist.

9. Vorkammeranordnung nach einem der vorhergehenden Ansprüche, wobei die Düsenöffnungen (6a, 6b) der Vorkammer (4) so konfiguriert sind, dass ein größerer Teil der Strömung von der Vorkammer (4) in die Hauptbrennkammer (7) zur Einlassventilseite (14) als zur Auslassventilseite (15) geleitet wird.

10. Vorkammeranordnung nach einem der vorhergehenden Ansprüche, wobei die Anzahl der einlassventilseitigen Düsenöffnungen (6a) größer ist als die Anzahl der auslassventilseitigen Düsenöffnungen (6b).

11. Vorkammeranordnung nach einem der vorhergehenden Ansprüche, wobei die durchschnittliche Querschnittsfläche der Düsenöffnungen (6a) auf der Einlassventilseite größer ist als die durchschnittliche Querschnittsfläche der Düsenöffnungen (6b) auf der Auslassventilseite.

12. Zylinderkopf (8) für einen Kolbenmotor, wobei der Zylinderkopf (8) mit einer Vorkammeranordnung nach einem der vorhergehenden Ansprüche ausgestattet ist.

13. Kolbenmotor mit einer Vorkammeranordnung nach einem der Ansprüche 1 bis 11.

## Revendications

1. Dispositif de préchambre pour un cylindre (1) d'un moteur à piston à quatre temps, le cylindre (1) comprenant
- une chambre de combustion principale (7) délimitée par les parois du cylindre (1), une culasse (8) et un piston (2),
- au moins une soupape d'admission (11), et
- au moins une soupape d'échappement (12),
dans lequel toutes les soupapes d'admission (11) du cylindre (1) sont disposées sur un côté soupape d'admission (14) d'un plan imaginaire (13) qui est parallèle à la direction axiale du cylindre (1) et divise le cylindre (1) en deux sections, et toutes les soupapes d'échappement (12) du cylindre (1) sont disposées sur un côté soupape d'échappement (15) dudit plan imaginaire (13),
dans lequel le dispositif comprend une préchambre (4) qui est pourvue d'au moins une ouverture de buse côté soupape d'admission (6a) qui est configurée pour évacuer les fluides de la préchambre (4) dans la chambre de combustion principale (7) sur le côté soupape d'admission (14) du cylindre (1), et au moins une ouverture de buse côté soupape d'échappement (6b) qui est configurée pour évacuer les fluides de la préchambre (4) dans la chambre de combustion principale (7) sur le côté soupape d'échappement (15) du cylindre (1), et
dans lequel la section transversale totale des ouvertures de buse côté soupape d'admission (6a) est supérieure à la section transversale totale des ouvertures de buse côté soupape d'échappement (6b),
**caractérisé en ce que** les ouvertures de buse (6a, 6b) de la préchambre (4) sont configurées pour guider le flux de la préchambre (4) dans la chambre de combustion principale (7) du côté de la soupape d'échappement (15) du cylindre (1) plus vers le piston (2) que du côté de la soupape d'admission (14) du cylindre (1).

2. Dispositif de préchambre selon la revendication 1, dans lequel la moyenne arithmétique des angles (β) entre la direction axiale (B) de chaque ouverture de buse côté soupape d'échappement (6b) de la préchambre (4) et la direction axiale (C) du cylindre (1) est inférieure à la moyenne arithmétique des angles (α) entre la direction axiale (A) de chaque ouverture de buse côté soupape d'admission (6a) de la préchambre (4) et la direction axiale (C) du cylindre (1).

3. Dispositif de préchambre selon la revendication 2, dans lequel la différence entre les moyennes arithmétiques est de 2 à 45 degrés.

4. Dispositif de préchambre selon l'une quelconque des revendications 1 à 3, dans lequel l'angle (β) entre la direction axiale (B) de l'une quelconque des ouvertures de buse côté soupape d'échappement (6b) de la préchambre (4) et la direction axiale (C) du cylindre (1) est inférieure à l'angle (α) entre la direction axiale (A) de l'une quelconque des ouvertures de buse côté soupape d'admission (6a) de la préchambre (4) et la direction axiale (C) du cylindre (1).

5. Dispositif de préchambre selon l'une quelconque des revendications précédentes, dans lequel le bord extérieur d'au moins une ouverture de buse côté soupape d'échappement (6b) comprend une partie arrondie ou chanfreinée (6b') qui est disposée sur le côté du piston (2).

6. Dispositif de préchambre selon la revendication 5, dans lequel la partie arrondie ou chanfreinée (6b') s'étend sur un angle de 90 à 200 degrés.

7. Dispositif de préchambre selon la revendication 6, dans lequel la partie arrondie ou chanfreinée (6b') s'étend sur un angle de 120 à 180 degrés.

8. Dispositif de préchambre selon l'une quelconque des revendications 5 à 7, dans lequel chaque ouverture de buse côté soupape d'échappement (6b) comprend une partie arrondie ou chanfreinée (6b').

9. Dispositif de préchambre selon l'une quelconque des revendications précédentes, dans lequel les ouvertures de buse (6a, 6b) de la préchambre (4) sont configurées de sorte qu'une plus grande partie du flux de la préchambre (4) dans la chambre de combustion principale (7) est dirigée vers le côté soupape d'admission (14) que vers le côté soupape d'échappement (15).

10. Dispositif de préchambre selon l'une quelconque des revendications précédentes, dans lequel le nombre d'ouvertures de buse côté soupape d'admission (6a) est supérieur au nombre d'ouvertures de buse côté soupape d'échappement (6b).

11. Dispositif de préchambre selon l'une quelconque des revendications précédentes, dans lequel la surface de section transversale moyenne des ouvertures de buse côté soupape d'admission (6a) est supérieure à la surface de section transversale moyenne des ouvertures de buse côté soupape d'échappement (6b).

12. Culasse (8) pour un moteur à piston, dans laquelle la culasse (8) est pourvue d'un dispositif de préchambre selon l'une quelconque des revendications précédentes.

13. Moteur à piston comprenant un dispositif de préchambre selon l'une quelconque des revendications 1 à 11.
